# EUROPÄISCHE PATENTANMELDUNG

(11) **EP 4 471 400 A1**
(43) Veröffentlichungstag der Anmeldung: **04.12.2024**
(21) Anmeldenummer: 23176429.1
(22) Anmeldetag: 31.05.2023
(51) Int. Cl.: G01M 13/028, G05B 23/02, H02K 11/20

(54) **MODELL EINES SOFTSENSORS ZUM MESSEN EINES MECHANISCHEN SCHADENS UND EIN SOFTSENSOR**

(71) Anmelder: Siemens Aktiengesellschaft, 80333 München (DE)
(72) Erfinder: Brückel, Martin, 91052 Erlangen (DE); Pradhan, Pranita Rajan, 91058 Erlangen (DE); Rieskamp, Timo, 80634 München (DE)
(74) Vertreter: Siemens Patent Attorneys

(57) **Zusammenfassung**

Die Erfindung betrifft ein Verfahren zum Bereitstellen eines Modells (101) eines Softsensors zum Messen eines mechanischen Schadens einer elektrischen rotatorischen Maschine (103), wobei das Modell (101) in dem Softsensor enthalten ist,
- über eine erste Schnittstelle (104), an der elektrischen rotatorischen Maschine (103) gemessene Beschleunigungssensordaten (106) und den Beschleunigungssensordaten (106) korrespondierende Magnetfeldsensordaten (107) empfangen werden,
- durch eine Recheneinrichtung (105),
* aus den Magnetfeldsensordaten (107) ein Betriebspunkt (111) der elektrischen rotatorischen Maschine (103) ermittelt wird, dem Betriebspunkt (103) korrespondierende Beschleunigungssensordaten (106) ermittelt und dem Betriebspunkt (111) zugeordnet werden, und aus den dem Betriebspunkt (111) korrespondierenden Beschleunigungssensordaten (106) eine Schwere des Schadens einer mechanischen Komponente der elektrischen rotatorischen Maschine (103) - eine Schadensschwere (114) - ermittelt wird,
* basierend auf den Magnetfeldsensordaten (107), den Beschleunigungssensordaten (106), dem Betriebspunkt (111) und der Schadensschwere (114), ein Modell (101) gebildet wird, welches Magnetfeldsensor- und Beschleunigungssensordaten (106, 107) als Eingangsgrö-ßen erhält und Betriebspunkte (111) und die Schadensschwere (114) als Ausgangsgröße ausgibt,

- über eine zweite Schnittstelle (120), das Modell (101) bereitgestellt wird.

## Beschreibung

Die vorliegende Offenbarung betrifft ein Verfahren zum Bereitstellen eines Modells eines Softsensors, wobei das Modell in dem Softsensor enthalten ist, zum Messen eines mechanischen Schadens einer elektrischen rotatorischen Maschine, einen Softsensor mit einem solchen Modell und ein Verfahren zum Messen des mechanischen Schadens der elektrischen rotatorischen Maschine mittels eines solchen Softsensors.

Bei der Zustandsüberwachung elektrischer Antriebe, beispielsweise elektrischer rotatorischer Maschinen, und ihrer industriellen Anwendungen ist eine der wichtigsten Messgrößen die Vibration, da diese, sofern mit ausreichend guter Messtechnik und in ausreichender Nähe zu den mechanischen Komponenten gemessen, einen guten Indikator für mögliche Fehler und Schadensfälle darstellt. Eine der beispielhaften Fehlerursachen, die auch durch die Schwingungsmessung erkannt werden kann, sind bei den elektrischen rotatorischen Maschinen hierbei vor allem Lagerschäden und andere mechanische Fehler, wie zum Beispiel Fehlausrichtungen der Achsen, oder mechanische Unwuchten in der Maschine oder der Anwendung, ebenso auch lose Fundamente. Ein grundsätzliches Problem stellt hierbei dar, dass die Schwingungsmessung von vielen externen Faktoren abhängen kann, besonders wenn nicht direkt an den mechanischen Komponenten (z.B. Lagergehäuse) gemessen wird. Besonders hat der Lastzustand der Maschine beziehungsweise ihrer Applikation einen wesentlichen Einfluss auf die Schwingungsamplitude wie auch die Ausprägung der Schadfrequenzen im Spektrum, ebenso die Drehzahl.

Das zentrale Problem bei der Beurteilung des mechanischen Schadens, beispielsweise des Schadzustandes eines Lagers beziehungsweise der Schadensschwere besteht darin, dass diese nicht allein aufgrund des Auftretens von spezifischen Schadfrequenzen beurteilbar ist, da sich gezeigt hat, dass diese bereits bei einem neu eingesetzten fehlerfreien Lager auftreten können. Ebenso kann durch die Messung mit einem externen Sensor, also einer Messung nicht direkt am Lagergehäuse, auch keine allgemeingültige Beurteilung der Schwere eines Schadens aufgrund von Frequenzausprägungen erfolgen. Um also eine generelle Aussage bezüglich eines Lagerschadens oder eines anderen entstehenden mechanischen Schadens zu einem spezifischen Zeitpunkt zu treffen, müssen die einzelnen Messungen in Bezug zueinander gesetzt werden.

Gängige Messsysteme zur Zustandsüberwachung werden entweder nur stichprobenartig eingesetzt, um ein kurzfristiges Lagebild über den Gesundheitszustand des Lagers und der mechanischen Komponenten zu erhalten, oder werten einzelne regelmäßig gesendete hochaufgelöste Schwingungs- oder Akustikdaten hinsichtlich Merkmale von Lagerschäden oder obengenannten Schadzuständen aus. Die Auswertung hierzu erfolgt meist auf Basis einzelner Rohdatenaufnahmen, die jeweils mehr oder weniger unabhängig voneinander betrachtet werden. Hierbei wird meist im Frequenzspektrum nach den Frequenzanteilen der mechanischen Rotationsfrequenz oder der bekannten Lagerschadensfrequenzen gefiltert und aus diesen Frequenzanteilen am Gesamtspektrum eine Bewertung der Schwere eines möglichen Schadens vorgenommen. Ein wesentlicher Nachteil der meisten gängigen Systeme ist hierbei, dass für eine präzise Erkennung und Bewertung von mechanischen Schäden, z.B. von Lagerschäden, spezifische Schadfrequenzen der in Rede stehenden mechanischen Komponenten (z.B. bei einem Lager: Innenringfrequenz, Außenringfrequenz, Wälzkörperfrequenz, Käfigfrequenz, usw.) und damit auch die ihre Geometrie und ihr spezieller Typ, Hersteller bekannt sein müssen - also beim Lager: Lagergeometrie, Lagertyp, und -hersteller. Diese spezifischen Informationen sind in der Praxis häufig nach einem Tausch der mechanischen Komponente nicht mehr verfügbar und auch bei einer verbauten Komponente ohne deren erneuten Ausbau nicht ohne weiteres erhältlich.

Aufgrund des oben Gesagten besteht ein Bedarf nach einem Softsensor, der Schadensschwere der mechanischen Komponenten mit wenig Vorkenntnissen über diese mechanischen Komponenten bestimmen kann.

Zu diesem Zweck wird ein Verfahren der oben genannten Art vorgeschlagen, bei welchem
- über eine erste Schnittstelle, an der elektrischen rotatorischen Maschine gemessene Beschleunigungssensordaten und den Beschleunigungssensordaten korrespondierende Magnetfeldsensordaten empfangen werden,
- durch eine Recheneinrichtung,
   * aus den Magnetfeldsensordaten ein Betriebspunkt der elektrischen rotatorischen Maschine ermittelt wird, dem Betriebspunkt korrespondierende Beschleunigungssensordaten ermittelt und dem Betriebspunkt zugeordnet werden, und aus den dem Betriebspunkt korrespondierenden Beschleunigungssensordaten eine Schwere des Schadens einer mechanischen Komponente der elektrischen rotatorischen Maschine - eine Schadensschwere - ermittelt wird,
   * basierend auf den Magnetfeldsensordaten, den Beschleunigungssensordaten, dem Betriebspunkt und der Schadensschwere, ein Modell gebildet wird, welches Magnetfeldsensor- und Beschleunigungssensordaten als Eingangsgrö-ßen erhält und die Schadensschwere als Ausgangsgröße ausgibt,
- über eine zweite Schnittstelle, das Modell bereitgestellt wird.

Mit anderen Worten betrifft die vorliegende Offenbarung ein Verfahren zum Erstellen beziehungsweise Antrainieren eines Softsensors für beziehungsweise an eine (konkrete) elektrische rotatorische Maschine.

Die Schadensschwere wird dabei als Funktion der Zeit, in der die Beschleunigungssensordaten gemessen wurden, ermittelt. Als Ausgangsgröße stellt das Modell vorzugsweise die Schadensschwere als Funktion der Zeit - also einen zeitlichen Trend der Schadensschwere - bereit.

Es versteht sich, dass unterschiedlichen Betriebspunkten unterschiedliche mechanische Schadensschwere zugeordnet sein kann.

Bei einer Ausführungsform kann es vorgesehen sein, dass die Beschleunigungssensordaten und die Magnetfeldsensordaten mit einem in dem Softsensor enthaltenen Hardware-Sensor gemessen werden, der beispielsweise außen an dem Maschinengehäuse angeordnet, insbesondere befestigt ist. Insbesondere kann es vorgesehen sein, dass der Hardware-Sensor nicht an der mechanischen Komponente, beispielsweise nicht an dem Lager angeordnet ist.

Bei einer Ausführungsform kann es vorgesehen sein, dass die Beschleunigungssensordaten vorverarbeitet werden. Die Vorverarbeitung kann beispielsweise eine Korrektur der den Daten zugeordneten Zeitstempel und/oder eine Filterung nach bestimmten Frequenzen umfassen. Lagerschadfrequenzen können beispielsweise in einem Bereich zwischen 3 kHz und 8 kHz liegen.

Bei einer Ausführungsform kann es vorgesehen sein, dass die Beschleunigungssensordaten und die Magnetfeldsensordaten über eine Vielzahl vorzugsweise disjunkter beziehungsweise nicht überlappender Zeitintervalle einer vorbestimmten Länge, die vorzugsweise 5 bis 10 Sekunden beträgt, gemessen werden. Solche einzelnen Messungen können zu unterschiedlichen Zeitpunkten, beispielsweise 2-3-mal am Tag, mehrere Tage nacheinander, 10 bis 30, insbesondere 15 Tage stattfinden. Dabei entsteht eine Vielzahl Rohdatenschnipsel, wobei jeder Schnipsel Daten einer beispielsweise 10-sekundenlangen Einzelmessung enthält. Die Schnipsel sind vorzugsweise hochaufgelöst.

Die Schadensschwere kann dabei für einzelne, vorzugsweise für alle Beschleunigungssensordatenschnipsel ermittelt werden. Beispielsweise entspricht die für einen einzigen Beschleunigungssensordatenschnipsel berechnete Schadensschwere einem Schadensschwere-Datenpunkt. Mehrere solche Schadensschwere-Datenpunkte können die Schadensschwere als Funktion der Zeit also ihre zeitliche Entwicklung beziehungsweise ihren Trend bilden.

Mit anderen Worten werden die Beschleunigungssensordaten gesammelt, vorzugsweise über einen längeren Zeitraum.

Somit kann bei einer Ausführungsform vorgesehen sein, dass die Beschleunigungssensordaten und die Magnetfeldsensordaten eine Vielzahl von Datenschnipseln umfassen, wobei jedem Beschleunigungssensordatenschnipsel genau ein Magnetfeldsensordatenschnipsel in Bezug gesetzt wird (und somit korrespondiert) .

Dabei müssen die Messintervalle für die Beschleunigungssensordaten und für die Magnetfeldsensordaten nicht identisch sein. D.h. die die Beschleunigungs- und die Magnetfeldsensordatenschnipsel können unterschiedlich ausgebildet sein - unterschiedliche Größe haben, unterschiedliche Datenmenge enthalten usw.

Beispielsweise können die Beschleunigungssensordaten mit 6,6 kHz 6 Sekunden lang in X-, Y-, Z-Richtung gemessene Vibrationswerte enthalten. Eine Magnetfeldmessung kann beispielsweise zwei Minuten mit 500 Hz erfolgen.

Bei einer Ausführungsform kann es vorgesehen sein, dass durch eine Recheneinrichtung, aus den Beschleunigungssensordaten eine oder mehr Schadenskennzahlen ermittelt werden und aus der einen oder mehr Schadenskennzahlen die Schadensschwere ermittelt wird.

Vorzugsweise wird das Modell konfiguriert, die Schadenskennzahl(en) als Ausgangsgröße(n) auszugeben.

Dabei kann es zweckmäßig sein, wenn die eine oder mehr Schadenskennzahlen einen Anteil und/oder eine Ausprägung zyklostationärer Frequenzen, d.h. die Amplitude der der zyklostationären Frequenz entsprechenden Signale, in den, beispielsweise vorverarbeiteten Beschleunigungssensordaten, vorzugsweise in dem jeweiligen Beschleunigungssensordatenschnipsel, charakterisieren.

Bei einer Ausführungsform kann es vorgesehen sein, dass die eine oder mehr Schadenskennzahlen mit Hilfe eines erweiterten Hüllkurvenspektrums (siehe Jérôme Antoni, Ge Xin, N. Hamzaoui: Fast computation of the spectral correlation) berechnet werden. Durch die Verwendung des erweiterten Hüllkurvenspektrums ist es möglich, zyklostationäre Frequenzen und damit mögliche Schadensfrequenzen auch noch bei einem geringen Signal-zu-Rausch-Verhältnis sicher zu erkennen. Dies ist vor allem bei externen Hardware-Sensoren wichtig, da hier generell ein höherer Rauschpegel zu beobachten ist und eine größere Anzahl externer Faktoren beim Übertragungsweg des Schadsignals von der Quelle zum Sensor auf das Signal beispielsweise additiv einwirkt und somit eine Störung verursacht.

Es wurde erkannt, dass die Ausprägung zyklostationärer Frequenzen ein Indikator für mechanische Schadfrequenzen ist, wobei diese nicht im Detail bekannt sein müssen, sondern nur der ungefähre Frequenzbereich ihres Auftretens im spezifischen Messsystem (Verstärkung durch Resonanzfrequenz des Messaufbaus, dadurch stärkere Ausprägung in spezifischem Frequenzbereich, ebenso bekannter Frequenzbereich des Auftretens spezifischer Schäden nach allgemeinem Kenntnisstand, z.B. für Lagerschäden zwischen 3 und 8 kHz).

Bei einer Ausführungsform kann es vorgesehen sein, dass die Beschleunigungssensordaten gefiltert, beispielsweise hoch- oder niedrigfrequenzgefiltert werden. Hochpassfilterung kann für die Messung von Lagerschäden besonders geeignet sein. Filtern nach zyklostationären Frequenzen kann außerdem das Signal-Rauschen-Verhältnis erhöhen, da das Rauschen nicht zyklostationär ist und beim Filtern rausgefiltert wird.

Bei einer Ausführungsform kann es vorgesehen sein, dass die Beschleunigungssensordaten Vibrationswerte umfassen, vorzugsweise Vibrationswerte in drei zueinander orthogonal stehende Richtungen umfassen.

Bei einer Ausführungsform kann es vorgesehen sein, dass anhand der Magnetfeldsensordaten ein Betriebspunktmodell der elektrischen rotatorischen Maschine erstellt wird, wobei Betriebspunktmodell einen oder mehrere Betriebspunkte durch den Betriebspunkten zugeordnete Drehzahlbereiche charakterisiert, wobei in dem Betriebspunktmodell unterschiedlichen Betriebspunkten unterschiedliche Drehzahlbereiche zugeordnet sind.

Die Drehzahlbereiche können aus den Magnetfeldsensordaten bestimmt werden.

Die Erstellung des Betriebspunktmodells kann beispielsweise in der Cloud erfolgen.

Bei einer Ausführungsform kann es vorgesehen sein, dass Betriebspunktmodell der elektrischen rotatorischen Maschine aus den (regelmäßig) gemessenen und beispielsweise in die Cloud gesendeten und dort von einer Cloud-Applikation gesammelten Drehzahl- und Drehmoment-Werten erstellt wird.

Dabei kann es zweckdienlich sein, wenn die unterschiedlichen Drehzahlbereiche aus den Magnetfeldsensordaten ermittelt und auf Basis der unterschiedlichen Drehzahlbereiche die unterschiedlichen Betriebspunkte definiert werden.

Im Hinblick auf die Drehzahlbereiche kann eine Unterscheidung der häufigsten Betriebspunkte vorgenommen werden. Hierzu kann beispielsweise ein Clustering-Algorithmus verwendet werden, der diese Unterscheidung vornimmt und das Betriebspunktmodell erstellt.

Bei einer Ausführungsform kann es vorgesehen sein, dass die dem jeweiligen Betriebspunkt korrespondierenden Beschleunigungssensordaten anhand des Betriebspunktmodells ermittelt werden. Anschließend können die Beschleunigungssensordaten dem jeweiligen Betriebspunkt zugeordnet werden.

Dabei können die Beschleunigungssensordaten, vorzugsweise alle gesammelten Beschleunigungssensor-Rohdatenaufnahmen anhand ihrer Drehzahl beziehungsweise ihres Drehmoments einem der erkannten Betriebspunkte zugeordnet werden.

Dabei erfolgt vorzugsweise für nicht eindeutig innerhalb eines Clusters liegende Rohdatenaufnahmen eine Zuordnung auf Basis der Distanz (z.B. euklidischer Abstand) zum nächstliegenden Zentroiden eines der Betriebspunktcluster.

Nach der Zuordnung der Beschleunigungssensordaten den jeweiligen Betriebspunkten, wobei vorzugsweise jede Beschleunigungssensordaten-Aufnahme einem der, wie beispielsweise vorgenannt beschrieben, ermittelten Betriebspunkte zugeordnet wird, können die (vorzugsweise alle) Beschleunigungssensor-Rohdatenaufnahmen und die daraus berechneten Schadensschwere und vorzugsweise Schadens-KPIs jeweils nach ihrem Betriebspunkt unterschieden werden.

Bei einer Ausführungsform kann es vorgesehen sein, dass das Modell anhand weiterer gemessener Beschleunigungssensor- und Magnetfeldsensordaten aktualisiert wird, wobei (durch diese Aktualisierung hervorgerufene) Änderungen der Schadensschwere verfolgt und in dem Modell gespeichert werden. Eine Aktualisierung kann beispielsweise jeden Monat erfolgen, bei jeder Wartung stattfinden o.Ä.

Insbesondere kann das Modell alle vergangenen entsprechenden Rohdatenschnipsel und die entsprechende Schadensschwere, z.B. in Form von Schadens-KPIs umfassen, beispielsweise seit dem Start der Datenaufzeichnung beziehungsweise seit dem letzten Wartungsintervall (z.B. Lagerwechsel).

Diese Aktualisierung erfolgt vorzugsweise für alle Betriebspunkte, und alle Schadenskennzahlen.

Das Modell umfasst also vorzugsweise für jeden Betriebspunkt und somit für die zugeordneten aus den Rohdatenschnipseln berechnete Schadensschwere, z.B. in Form von Schadens-KPIs, als Funktion der Zeit. Mit anderen Worten ermöglicht das Modell eine Trendüberwachung der Schadensschwere. Die Schadensschwere hängt beispielsweise mit der Zyklostationarität zusammen, deren Ausprägung zur Quantifizierung des Schadens verwendet werden kann.

Vorteilhaft ist dabei, dass das Modell die Schadensschwere prinzipiell nicht aufgrund eines Wertes beurteilt, sondern aufgrund einer zeitlichen Entwicklung.

Mit anderen Worten kann das Modell als Trendmodell beziehungsweise Trenderkennungsmodell ausgebildet sein.

Beispielsweise kann das Modell einen oberen Grenzwert für die Schadensschwere und vorzugsweise für die jeweiligen Schadens-KPIs enthalten.

Bei einer Ausführungsform kann es zweckmäßig sein, wenn für den, vorzugsweise für jeden Betriebspunkt eine Trenderkennung für die dem Betriebspunkt zugeordneten Schadensschwere, vorzugsweise mittels eines statistischen Modells, beispielsweise eines ARIMA-Modells erfolgt (ARIMA ist engl. für autoregressive integrated moving average). Dadurch kann der bisherige Trend der Schadensschwere exakter modelliert werden. Wird z.B. die Ausprägung der Frequenzen stärker, ist es ein Indiz darauf, dass sich der Gesundheitszustand der elektrischen rotatorischen Maschine verschlechtert. Daraus können Meldungen (z.B. ein Alarm) an den Benutzer schon früher erfolgen und Maßnahmen zur Fehlerprävention (Wartungsarbeiten wie z.B. Lagertausch) schon früher abgeleitet werden als bei der vorgenannten Grenzwertüberschreitung.

Bei einer Ausführungsform kann es vorgesehen sein, dass aus den Änderungen eine verbleibende Lebensdauer der mechanischen Komponente der elektrischen rotatorischen Maschine ermittelt wird.

Mit anderen Worten wird es ermöglicht, aus der zeitlichen Entwicklung / Tendenz spezifischer Frequenzanteile über einen längeren Zeitraum auf die Schwere eines Schadens als Funktion der Zeit und/oder die ungefähre verbleibende Lebensdauer einer mechanischen Komponente, z.B. eines Lagers, zu schließen.

Dem vorgenannten Bedarf wird auch mit einem Verfahren zum Bereitstellen eines Softsensors zum Messen eines mechanischen Schadens einer elektrischen rotatorischen Maschine Rechnung getragen, wobei beim Verfahren ein Hardware-Sensor des Softsensors bereitgestellt wird, der zur Messung der Beschleunigungssensordaten und den Beschleunigungssensordaten korrespondierender Magnetfeldsensordaten an der elektrischen rotatorischen Maschine, beispielsweise an dem Maschinengehäuse, vorgesehen ist, ein Modell des Softsensors wie vorgenannt beschrieben bereitgestellt wird.

Des Weiteren ist dem Bedarf mit einem Softsensor zum Messen eines mechanischen Schadens einer elektrischen rotatorischen Maschine Rechnung getragen, wobei der Softsensor umfasst: einen Hardware-Sensor, wobei der Hardware-Sensor ausgebildet und konfiguriert ist, Beschleunigungssensordaten und den Beschleunigungssensordaten korrespondierende Magnetfeldsensordaten an einer elektrischen rotatorischen Maschine zu messen, und ein Modell, welches wie vorgenannt beschrieben bereitgestellt ist.

Ein solcher Softsensor bildet ein Analysesystem zur Erkennung und Bewertung des Schweregrades eines entstehenden mechanischen Schadens einer mechanischen Komponente, insbesondere eines Lagerschadens.

Außerdem ist dem Bedarf mit einem Verfahren zum Messen eines mechanischen Schadens einer elektrischen rotatorischen Maschine mittels des vorgenannten Softsensors Rechnung getragen, wobei mit dem Hardware-Sensor Beschleunigungssensordaten und den Beschleunigungssensordaten korrespondierende Magnetfeldsensordaten, beispielsweise in Form von Schnipseln, gemessen und dem Modell zugeführt werden, das Modell aus den Beschleunigungs- und Magnetfeldsensordaten eine Schwere des Schadens einer mechanischen Komponente der elektrischen rotatorischen Maschine ermittelt.

Bei einer Ausführungsform kann es vorgesehen sein, dass das Modell eine Schadensschwere als Funktion der Zeit aus den gemessenen Daten ermittelt und diesen mit der im Modell vorlegenden "normalen" Schadensschwere vergleichen. Die "normale" beziehungsweise unkritische Schadensschwere kann beispielsweise durch einen Grenzwert oder durch einen Trend charakterisiert sein, die aus den Messdaten beim Erstellen des Modells ermittelt wurden (siehe oben). Basierend auf dem Vergleich können Meldungen, wie beispielsweise Alarme ausgegeben werden, die von weiteren Informationen an den Benutzer begleitet werden können (Kontext zu der Meldung o.Ä.).

Wird beispielsweise der Grenzwert (z.B. an einem Tag) mehrfach überschnitten, wird ein Alarm ausgegeben. Wird ein Grenzwert an dem darauffolgenden Tag noch wesentlich mehr überschritten, verschlechtert sich der Zustand schneller, es wird kritischer.

Ist der Trend der Schadensschwere steiler geworden, kann das Modell prüfen, ob diese neue Tendenz noch innerhalb vorgegebener beziehungsweise vorgebbarer Toleranz liegt. Abhängig von der Abweichung zur bisherigen Tendenz innerhalb eines jeden Betriebspunktes kann der Schweregrad der Verschlechterung des mechanischen Schadensbildes beispielsweise des Lagerzustandes bestimmt werden, wobei generell ein steilerer Anstieg auf eine schnellere Verschlechterung als im bisherigen Trend und damit eine höhere Kritikalität (Wartungsarbeiten wie z.B. Lagertausch dringend nötig), und ein flacherer Anstieg auf eine langsamere Verschlechterung und damit eine geringere Kritikalität hindeutet. Das Ergebnis dieser Auswertung der Schadensschwere bezüglich des bisherigen Trends kann dem Anwender kommuniziert, beispielsweise über eine Statusänderung in Form einer Ampel in einem Dashboard (z.B. Ampel springt von Grün auf Gelb oder auf Rot bei sehr steilem Anstieg des Trends) werden und vorzugsweise zur Aktualisierung des Modells verwendet werden. Optional kann der Anwender beispielsweise gleichzeitig auf die jeweilige Dringlichkeit entsprechender Wartungsmaßnahmen hingewiesen (z.B. Lagertausch innerhalb weniger Wochen oder Monate notwendig) werden.

Zusammenfassend ist durch eine regelmäßige Aufnahme von Rohdatenschnipseln (z.B. jeden Tag je 10 Sekunden) und die Fokussierung auf den Trend oder die Tendenz der berechneten Schadensschwere und beziehungsweise der Schadensindikatoren (KPIs) anstatt des absoluten Wertes eine robustere Bestimmung der Schadensschwere möglich als mit herkömmlichen Messmethoden und Auswertungsverfahren, wie zum Beispiel im Extremfall bei Stichprobenmessungen, die häufig keinerlei Vergleichbarkeit im zeitlichen Verlauf garantieren können oder sowieso nur einmalig getätigt werden. Außerdem erlaubt die Auswertung des Trends im Vergleich zum vorherigen Trend der Verschlechterung eine bessere Prognose eines möglichen Ausfalls und somit der restlichen verbleibenden Lebensdauer beispielsweise im Falle eines Lagerschadens.

Weitere Merkmale, Eigenschaften und Vorteile der vorliegenden Erfindung ergeben sich aus der nachfolgenden Be-schreibung unter Bezugnahme auf die beiliegenden Figuren. Darin zeigen schematisch:
- FIG 1: einen Ablauf eines Verfahrens zum Bereitstellen eines Modells eines Softsensors, und
- FIG 2: einen Ablauf eines Verfahrens zum Messen eines Lagerschadens einer elektrischen rotatorischen Maschine.

In den Ausführungsbeispielen und Figuren können gleiche oder gleich wirkende Elemente jeweils mit den gleichen Bezugszeichen versehen sein. Die dargestellten Elemente und deren Grö-ßenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

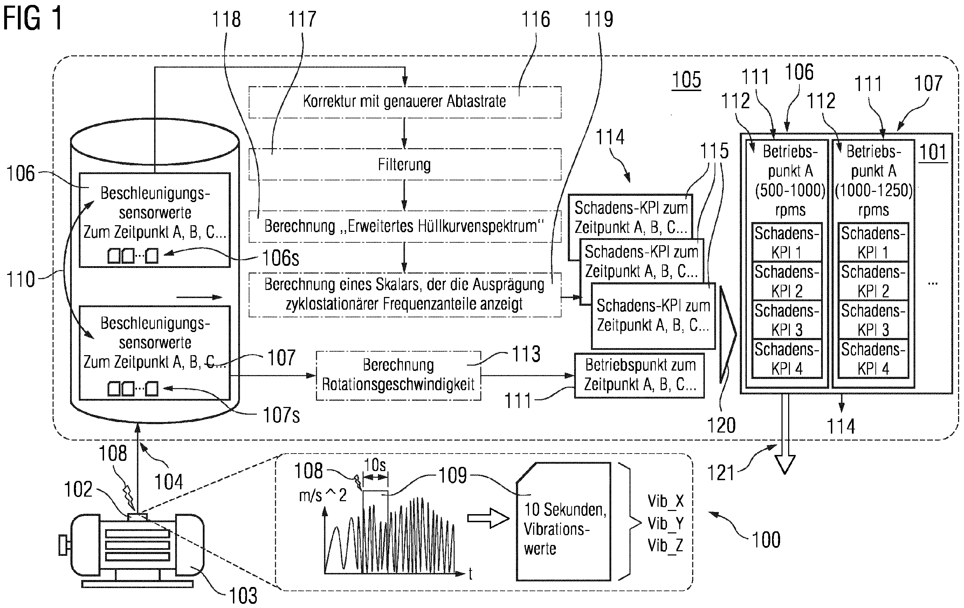

FIG 1 zeigt schematisch einen beispielhaften Ablauf eines Verfahrens 100 zum Bereitstellen eines Modells 101 eines Softsensors, welcher zusätzlich zu dem Modell 101 einen Hardware-Sensor 102 umfasst.

Der vorliegende Softsensor ist ausgebildet, einen mechanischen Schaden eines Elektromotors 103 beziehungsweise eine oder mehrere seiner Komponenten zu messen.

Dieser Schaden kann beispielsweise das Lager, die Fehlausrichtung (z.B. an der Achse/Welle), die mechanische Unwucht, oder die lockere Lagerung des gesamten Motors 103 am Fundament - loses Fundament beziehungsweise zu Englisch "Loosefoot" betreffen.

Das Erstellen des Modells 101 beginnt, indem beispielsweise über eine erste Schnittstelle 104 einer Recheneinrichtung 105, Beschleunigungssensordaten 106 und den Beschleunigungssensordaten 106 korrespondierende Magnetfeldsensordaten 107 empfangen werden.

Die Recheneinrichtung 105 ist beispielsweise als eine Cloud-Infrastruktur ausgebildet und kann mehrere miteinander vernetze und koordiniert zusammenarbeitende Recheneinheiten umfassen.

FIG 1 lässt erkennen, dass der Hardware-Sensor 102 am Elektromotor 103 angebracht, außen am Motorgehäuse befestigt ist, und die Beschleunigungssensordaten 106 sowie die Magnetfeldsensordaten 107 misst. Die Beschleunigungssensordaten 106 können Vibrationswerte, beispielsweise des Elektromotorlagers in X-, Y-, und Z-Richtung umfassen Vib_X, Vib_Y, und Vib_Z.

Der Hardware-Sensor 102 weist vorzugsweise eine Kommunikationseinheit auf und ist drahtlos, beispielsweise von der Cloud-Infrastruktur 105 aus, ansteuerbar. Insbesondere ist der Hardware-Sensor 102 als ein IIoT-Gerät ausgebildet.

Die Messung und der Upload der Beschleunigungs- 106 und der Magnetfeldsensordaten 107 kann per Trigger 108 erfolgen. Grundsätzlich kann der Trigger 108 zu unterschiedlichen Zeitpunkten, beispielsweise mehrmals (z.B. 2-3-mal) pro Tag getätigt werden. Eine Messung, die eine Vielzahl Einzelmessungen enthalten kann, kann insgesamt mehrere Tage, z.B. 10, 15, 30 Tage oder länger dauern und eine Vielzahl getriggerte Messabschnitte beziehungsweise Einzelmessungen 109 umfassen. Ein einzelner Messabschnitt 109 kann beispielsweise einige Sekunden, vorzugsweise 5 bis 10 Sekunden dauern.

Insbesondere können die Beschleunigungssensordaten 106 die Schnipsel 106s mit Vibrationswerten in X-, Y-, Z-Richtung umfassen, die mit 6,6 kHZ, 6 Sekunden lang gemessen wurden.

Eine Magnetfeldmessung kann beispielsweise zwei Minuten lang mit einer Frequenz von 500 Hz erfolgen.

Die Messdaten (die Beschleunigungssensordaten 106 und die Magnetfeldsensordaten 107) können somit eine Vielzahl von Datenschnipseln 106s, 107s enthalten.

Vorzugsweise durch die Recheneinrichtung 105 wird jedem Beschleunigungssensordatenschnipsel 106s genau ein Magnetfeldsensordatenschnipsel 107s in Bezug gesetzt. Hierdurch wird eine (zeitliche) Korrespondenz 110 zwischen den Beschleunigungs- 106 und den Magnetfeldsensordaten 107 festgelegt.

Die Recheneinrichtung 105 ermittelt aus den Magnetfeldsensordaten 107 Betriebspunkte 111 des Elektromotors 103, sodass der Betriebspunkt 111 zu einem aus den Messdaten bestimmbaren Zeitpunkt A, B, C, ... bekannt ist. Dabei kann die Recheneinrichtung 105 die jeweiligen Betriebspunkte 111 beispielsweise vorbestimmten Drehzahlbereichen 112 zuordnen. Dies kann auf Basis regelmäßig, z.B. bei jedem Trigger 108 gesendeter Motorkennzahlen, wie beispielsweise Drehzahl und/oder Drehmoment des Elektromotors 103 erfolgen, wobei die Motorkennzahlen durch den Hardware-Sensor 102 ermittelt werden. Dabei kann der Hardware-Sensor 102 konfiguriert sein, Drehzahlen und/oder Drehmomente aus den Magnetfeldsensordaten 107 zu ermitteln.

Vorzugsweise wird der Betriebspunkt 111 für jeden Magnetfeldsensordatenschnipsel 107s ermittelt.

Die ermittelten Betriebspunkte 111 können in einem Betriebspunktmodell des Elektromotors 103 zusammengefasst werden. Das Betriebspunktmodell charakterisiert dabei die Betriebspunkte 111 durch die den Betriebspunkten 111 zugeordneten Drehzahlbereiche 112. In dem Betriebspunktmodell können unterschiedlichen Betriebspunkten 111 unterschiedliche Drehzahlbereiche 112 zugeordnet sein.

Beispielsweise können die unterschiedlichen Drehzahlbereiche 112 aus den Magnetfeldsensordaten 107 ermittelt werden. Dies kann durch die Recheneinrichtung 105 erfolgen 113 oder auch im Hardware-Sensor 102 berechnet werden. Anschließend können auf Basis der unterschiedlichen Drehzahlbereiche 112 die unterschiedlichen Betriebspunkte 111 definiert werden.

Das Betriebspunktmodell kann beispielsweise mittels eines Clustering-Algorithmus erstellt werden, welcher in Hinblick auf die Drehzahlbereiche 112 eine Unterscheidung der häufigsten Betriebspunkte 111 ermöglicht. Als Betriebspunkt 111 im Rahmen des mittels eines Clustering-Algorithmus gebildeten Betriebspunktmodells wird ein Betriebspunktcluster angesehen, welcher mehrere oder gar eine Vielzahl innerhalb desselben Drehzahlbereichs 112 liegende Betriebspunkte 111 umfasst.

Die Recheneinrichtung 105 ermittelt den jeweiligen Betriebspunkten korrespondierende Beschleunigungssensordaten 106 und ordnet diese dem jeweiligen Betriebspunkt 111 zu. Dies kann ebenfalls anhand der Drehzahl beziehungsweise des Drehmoments erfolgen, die mit den Beschleunigungssensordaten 106 assoziiert sind.

Mit anderen Worten können alle gesammelten Rohdatenaufnahmen 106, 107 anhand ihrer Drehzahl beziehungsweise ihres Drehmoments einem der erkannten Betriebspunkte 111 zugeordnet werden. Dabei kann die Drehzahl beziehungsweise das Drehmoment wie eine Art Datenlabel dienen.

Die Ermittlung der den jeweiligen Betriebspunkten korrespondierenden Beschleunigungssensordaten 106 (und die Zuordnung) kann anhand des Betriebspunktmodells erfolgen. Dies kann auf Basis einer Distanz, beispielsweise eines euklidischen Abstands zum nächstliegenden Zentroiden eines der Betriebspunktcluster erfolgen.

Aus den dem jeweiligen Betriebspunkt 111 korrespondierenden Beschleunigungssensordaten 106 berechnet die Recheneinrichtung 105 eine Schwere des Schadens einer mechanischen Komponente des Motors - also eine Schadensschwere 114.

Die Schadensschwere 114 eines jeden Betriebspunktes 111 kann beispielsweise in Form einer oder mehr Schadenskennzahlen 115 oder Schadens-KPIs (KPI für engl. Key Performance Indicator) ermittelt werden.

Bei einer zweckdienlichen Ausgestaltung des Verfahrens kann die eine oder mehr Schadenskennzahlen 115 einen Anteil und/oder eine Ausprägung zyklostationärer Frequenzen in den Beschleunigungssensordaten 106, vorzugsweise in dem jeweiligen Beschleunigungssensordatenschnipsel 106s charakterisieren. Der Verwendung der zyklostationären Frequenzen liegt die Erkenntnis zugrunde, dass die Schadfrequenzen, insbesondere bei einem Lagerschaden, zyklostationär sind.

Die Schadenskennzahlen 115 können beispielsweise mit Hilfe eines erweiterten Hüllkurvenspektrums berechnet werden.

FIG 1 lässt erkennen, dass die Ermittlung der Schadens-KPIs 115 aus den Beschleunigungssensordatenschnipseln 106s im Wesentlichen vier Schritte umfassen kann.

Die Korrektur 116 der Beschleunigungssensordaten 106 beziehungsweise der Beschleunigungssensordatenschnipsel 106s mit genauerer Abtastrate beziehungsweise die Korrektur der Zeitstempel durch eine korrigierte Abtastrate und die Filterung 117 bilden dabei die Schritte einer Datenvorverarbeitung. Die Filterung 117 kann dabei eine Hoch- oder Niedrigfrequenzfilterung sein und ist grundsätzlich aufgabenspezifisch. Für Bestimmung eines Lagerschadens beispielsweise ist die Hochpassfilterung zweckmäßig, da die relevanten Frequenzen in dem korrespondierenden Bereich des Spektrums liegen.

Es kann dabei zweckmäßig sein, die Beschleunigungssensordaten 106 nach den oben beschriebenen zyklostationären Frequenzen zu filtern. Hierdurch kann das Rauschen besser rausgefiltert und gleichzeitig das Signal-Rausch-Verhältnis verbessert werden.

Außerdem sind zyklostationäre Effekte von der Drehzahl abhängig, d.h. mehr oder weniger ausgeprägt. Z.B. je höher die Drehzahl ist, umso ausgeprägter ist das Signal (zyklostationäre Frequenz). Mit anderen Worten weisen die zyklostationären Frequenzen ein betriebspunktabhängiges Verhalten auf.

Für die wie oben beschrieben vorverarbeiteten Beschleunigungssensordaten 106 kann eine erweitertes Hüllkurvenspektrum berechnet werden 118.

Aus dem erweiterten Hüllkurvenspektrum kann eine Berechnung 119 eines Skalars erfolgen, der die Ausprägung zyklostationärer Frequenzanteile anzeigt.

Die berechneten Skalare dienen als Schadens-KPIs für den jeweiligen Betriebspunkt 111.

Zusammenfassend wird das Modell 101 basierend auf den Magnetfeldsensordaten 106, den Beschleunigungssensordaten 107, dem Betriebspunkt 111 und der Schadensschwere 114 gebildet 120. Dies bedeutet insbesondere, dass die oben beschriebenen, von der Recheneinrichtung 105 ausgeführten Schritte in dem Modell 101 in Form von maschinenausführbaren Befehlen (z.B. Computercode) vorliegen, sodass das Modell 101 von einer beliebigen Recheneinrichtung ausgeführt werden kann, indem sie die in dem Modell 101 vorliegenden Befehle abarbeitet.

Das Modell 101 erhält Magnetfeldsensor- und Beschleunigungssensordaten 106, 107 als Eingangsgrößen und gibt die Schadensschwere 114 als Ausgangsgröße aus.

Es versteht sich, dass unterschiedlichen Betriebspunkten 111 unterschiedliche mechanische Schadensschwere 114 zugeordnet sein kann.

FIG 1 lässt außerdem erkennen, dass, wenn die Schadensschwere 114 durch die Schadenskennzahlen 115 charakterisiert wird, kann das Modell 101 so konfiguriert sein, dass es beispielsweise die Schadensschwere in Form der dem jeweiligen Betriebspunkt 111 zugeordneten Schadenskennzahlen 115 als Ausgangsgröße ausgibt.

Das Modell 101 wird über eine zweite Schnittstelle 121 der Recheneinrichtung 105 bereitgestellt.

Das Modell 101 kann anhand weiterer gemessener Beschleunigungssensor- und Magnetfeldsensordaten aktualisiert werden (hier nicht gezeigt).

Die durch diese Aktualisierung hervorgerufenen Änderungen der dem Betriebspunkt 111 zugeordneten Schadensschwere 114 können dabei verfolgt und in dem Modell 101 gespeichert werden. Es kann zweckmäßig sein, die Änderungen für alle Betriebspunkte 111 und für alle Schadens-KPIs 115 zu verfolgen.

Die Aktualisierung des Modells 101 kann in regelmäßigen Zeitabständen erfolgen (z.B. einmal pro Monat). Grundsätzlich aber kann die Regelmäßigkeit von einem Erfahrungswert abhängen, der Information über die Schnelligkeit der Verschlechterung des Zustandes der mechanischen Komponente enthält.

Es kann dabei für jeden Betriebspunkt 111 eine Trenderkennung bei der einschlägigen Schadensschwere 114 erfolgen. Dies kann beispielsweise mittels eines statistischen Modells, beispielsweise eines ARIMA-Modells erfolgen.

Aus den Änderungen und insbesondere aus dem Trend, der dem Betriebspunkt 111 zugeordneten Schadensschwere 114, kann eine verbleibende Lebensdauer der mechanischen Komponente des Elektromotors ermittelt werden.

Mit anderen Worten beschreibt das aktualisierte Modell den bisherigen Trend der berechneten Schadens-KPIs 115 innerhalb jedes erkannten Betriebspunkts 111 und hängt somit prinzipiell nicht vom absoluten Wert der Schadens-KPIs 115, sondern primär deren zeitlicher Entwicklung ab.

Mit dem Modell 101 ist es also möglich, aus der zeitlichen Entwicklung / Tendenz spezifischer Frequenzanteile über einen längeren Zeitraum auf die Schwere eines Schadens und insbesondere die ungefähre verbleibende Lebensdauer der mechanischen Komponente, beispielsweise des Lagers und der mechanischen Komponenten zu schließen.

Das in Bezug auf FIG 1 beschriebene Verfahren kann als Verfahren zum Antrainieren beziehungsweise zum Erstellen eines Softsensors für einen konkreten Elektromotor 103 angesehen werden. Die Phase der Erstellung des Modells 101 stellt dabei eine Phase des Kennenlernens des Elektromotors 103 und im Allgemeinen einer elektrischen rotatorischen Maschine. Insofern beschreibt das Modell das normale Verhalten des Elektromotors 103.

Das Modell 101 kann außerdem Schranken für die Schadensschwere 114 erhalten. Die Schranken können als eine oder mehrere statistischen Größen ausgebildet sein, die aus der Schadensschwere 114 berechnet werden können, wie beispielsweise Maximum (oder ein anderer oberer Grenzwert), Standardabweichung, etc.

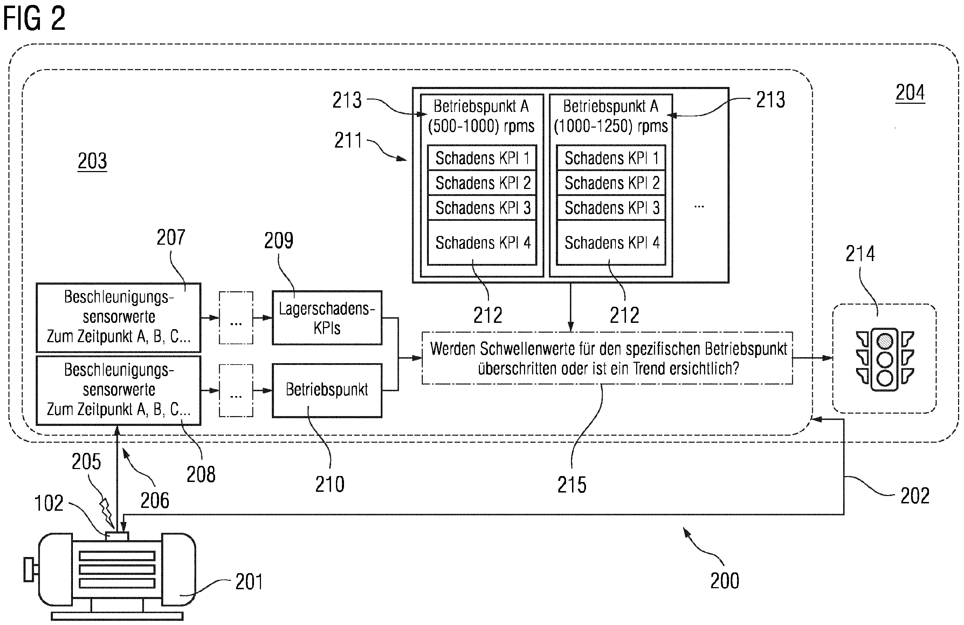

FIG 2 zeigt schematisch einen beispielhaften Ablauf eines Verfahrens 200 zum Messen eines Lagerschadens einer elektrischen rotatorischen Maschine 201.

Der Maschine 201 ist ein Softsensor 202 zugeordnet, wobei ein Hardware-Sensor des Softsensors 202 als Hardware-Sensor 102 der FIG 1 ausgebildet sein kann. Der Hardware-Sensor 102 ist vorzugsweise in gleicher Weise an der Maschine 201 angebracht, wie an dem Elektromotor 103.

Darüber hinaus weist der Softsensor 202 ein Modell 203 auf. Das Modell 203 wurde gemäß den in Bezug auf FIG 1 beschriebenen Schritten mit dem Unterschied erstellt, dass die Messungen an der Maschine 201 vorgenommen wurden, die Filterung 117 als eine Hochpassfilterung ausgebildet war, um der Lage der Lagerschadenfrequenzen (z.B. 3 - 8 KHz) Rechnung zu tragen und die Schadens-KPIs 115 somit Lagerschadens-KPIs sind.

Das Modell 203 ist in einer Recheneinrichtung 204 gespeichert, die das Modell 203 ausführt. Es versteht sich, dass bei dem in Bezug auf FIG 2 beschriebenen Verfahren auch die Recheneinrichtung 105 der FIG 1 verwendet werden kann.

Bei dem Verfahren werden Abweichungen von dem normalen Zustand des Lagers, welcher in dem Modell 203 beschrieben ist, erkannt und beurteilt.

Der Hardware-Sensor 102 misst Beschleunigungssensordaten und Magnetfeldsensordaten an der elektrischen rotatorischen Maschine 201. Die Messung kann beispielsweise durch einen Auslöser ausgelöst werden.

Die Modalitäten der erfolgten Messung sind der in Bezug auf FIG 1 beschriebenen Messung vorzugsweise gleich - Dauer einer einzelnen Messung (z.B. 10 Sekunden), ihre Häufigkeit, usw. usf.

Die Beschleunigungssensordaten und die Magnetfeldsensordaten werden (vorzugsweise in Form von Datenschnipseln) an die Recheneinrichtung 204 drahtgebunden oder drahtlos übertragen und von der Recheneinrichtung an einer ersten Schnittstelle 206 empfangen.

Das Modell 203 verarbeitet die Beschleunigungssensordatenschnipsel 207 und die Magnetfeldsensordatenschnipsel 208 so, wie dies für die Beschleunigungssensordaten 106 und die Magnetfeldsensordaten 107 der FIG 1 beschrieben wurde.

Aus den Beschleunigungssensordatenschnipseln 207 werden also Lageschadens-KPIs 209 und aus den Magnetfeldsensordatenschnipseln 208 der jeweilige Betriebspunkt 210 ermittelt. Dies erfolgt vorzugsweise, wie oben beschrieben, über Bestimmung von Drehzahlbereichen und durch Clustern der Betriebspunkte gemäß den Drehzahlbereichen.

Es versteht sich, dass die (neu ermittelten) Lageschadens-KPIs 209 dazu verwendet werden können, das Modell 203 zu aktualisieren.

Das Modell 203 führt anschließend einen Vergleich mit den Daten 211 durch, die während der Kennenlernphase der Maschine 201 erhoben wurden und in diesem Sinne den normalen Zustand des Lagers beschreiben.

Das Modell 203 kann beispielsweise den Vergleich nur anhand einer oberen Grenzwertberechnung für die jeweiligen in dem Modell 203 vorliegenden Lagerschadens-KPIs 212 durchführen.

Liegen in dem Modell 203 für die in dem Modell 203 gespeicherten Lagerschadens-KPIs 212 entsprechende Trends vor, die wie oben beschrieben, beispielsweise mit Hilfe des ARIMA-Modells, berechnet wurden, kann das Modell 203 dieselbe statistische Auswertung (z.B. das ARIMA-Modell) dazu verwenden, um Abweichungen von den bisherigen Trends zu ermitteln.

Abhängig von der Abweichung zu den bisherigen Trends innerhalb eines dem ermittelten Betriebspunkt 210 entsprechenden in dem Modell 203 gespeicherten Betriebspunktes 213 kann das Modell 203 den Schweregrad der Verschlechterung des Lagerzustandes bestimmen.

Dabei lässt ein steilerer Anstieg auf eine schnellere Verschlechterung als im bisherigen Trend und damit auf eine höhere Kritikalität (z.B. Wartungsarbeiten wie z.B. Lagertausch dringend nötig) hindeuten. Ein flacherer Anstieg hingegen deutet auf eine langsamere Verschlechterung und damit eine geringere Kritikalität hin.

Das Ergebnis dieser Auswertung der aus den Messdaten 207, 208 berechneten Lageschadens-KPIs 209 bezüglich des bisherigen Trends kann das Modell 203 einem Anwender kommunizieren. Hierzu kann das Modell 203 die Recheneinrichtung 204 verwenden, die beispielsweise eine Anzeigevorrichtung 214 umfassen kann. Dabei kann das Modell 203 beispielsweise prüfen 215, ob bestimmte vorgegebene Schwellwerte für den spezifischen Betriebspunkt 210 überschritten oder ein Trend ersichtlich ist.

Beispielsweise kann das Modell 203 die Recheneinrichtung 204 dazu veranlassen, ein Signal zu generieren, das zur Anzeige einer Statusänderung in Form einer Ampel in einem Dashboard an der Anzeigevorrichtung 214 führt. Die Ampel springt beispielsweise von Grün auf Gelb oder auf Rot bei sehr steilem Anstieg des Trends. Gleichzeitig kann das Modell 203 die Recheneinrichtung 204 veranlassen, ein weiteres Signal zu generieren, das dazu verwendet wird, den Anwender auf die jeweilige Dringlichkeit entsprechender Wartungsmaßnahmen hinzuweisen (z.B. Lagertausch innerhalb weniger Wochen oder Monate notwendig). Es versteht sich, dass diese Information (Ampel und Hinweis auf Dringlichkeit) in dem gleichen Signal enthalten sein kann.

Das Ergebnis dieser Auswertung der aus den Messdaten 207, 208 berechneten Lageschadens-KPIs 209 bezüglich des bisherigen Trends kann außerdem zur Aktualisierung des Modells 203 verwendet werden.

Die Aufgabe dieser Beschreibung besteht lediglich darin, veranschaulichende Beispiele bereitzustellen und weitere Vorteile und Besonderheiten dieser Erfindung anzugeben. Somit kann sie nicht als Einschränkung des Anwendungsgebiets der Erfindung beziehungsweise der in den Ansprüchen beanspruchten Patentrechte interpretiert werden. Insbesondere können die im Zusammenhang mit den hier beschriebenen Verfahren offenbarte Merkmale sinnvollerweise zur Weiterbildung der hier beschriebenen Sensoren eingesetzt werden und vice versa.

## Patentansprüche

1. Verfahren zum Bereitstellen eines Modells (101) eines Softsensors zum Messen eines mechanischen Schadens einer elektrischen rotatorischen Maschine (103), wobei das Modell (101) in dem Softsensor enthalten ist,
- über eine erste Schnittstelle (104), an der elektrischen rotatorischen Maschine (103) gemessene Beschleunigungssensordaten (106) und den Beschleunigungssensordaten (106) korrespondierende Magnetfeldsensordaten (107) empfangen werden,
- durch eine Recheneinrichtung (105),
* aus den Magnetfeldsensordaten (107) ein Betriebspunkt (111) der elektrischen rotatorischen Maschine (103) ermittelt wird, dem Betriebspunkt (103) korrespondierende Beschleunigungssensordaten (106) ermittelt und dem Betriebspunkt (111) zugeordnet werden, und aus den dem Betriebspunkt (111) korrespondierenden Beschleunigungssensordaten (106) eine Schwere des Schadens einer mechanischen Komponente der elektrischen rotatorischen Maschine (103) - eine Schadensschwere (114) - ermittelt wird,
* basierend auf den Magnetfeldsensordaten (107), den Beschleunigungssensordaten (106), dem Betriebspunkt (111) und der Schadensschwere (114), ein Modell (101) gebildet wird, welches Magnetfeldsensor- und Beschleunigungssensordaten (106, 107) als Eingangsgrö-ßen erhält und Betriebspunkte (111) und die Schadensschwere (114) als Ausgangsgröße ausgibt,
- über eine zweite Schnittstelle (120), das Modell (101) bereitgestellt wird.

2. Verfahren nach Anspruch 1, wobei die Beschleunigungssensordaten (106) und die Magnetfeldsensordaten (107) mit einem in dem Softsensor enthaltenen Hardware-Sensor (102) gemessen werden.

3. Verfahren nach Anspruch 1 oder 2, wobei die Beschleunigungssensordaten (106) und die Magnetfeldsensordaten (107) über eine Vielzahl Zeitintervalle einer vorbestimmten Länge, die vorzugsweise 5 bis 10 Sekunden beträgt, gemessen werden.

4. Verfahren nach Anspruch 3, wobei die Beschleunigungssensordaten (106) und die Magnetfeldsensordaten (107) eine Vielzahl von Datenschnipseln (106s, 107s, 109) umfassen, wobei jedem Beschleunigungssensordatenschnipsel (106s) genau ein Magnetfeldsensordatenschnipsel (107s) in Bezug gesetzt wird.

5. Verfahren nach einem der Ansprüche 1 bis 4, wobei durch die Recheneinrichtung (105), aus den Beschleunigungssensordaten (106) eine oder mehr Schadenskennzahlen (115) ermittelt werden und aus der einen oder mehr Schadenskennzahlen (115) die Schadensschwere (114) ermittelt wird, wobei vorzugsweise das Modell (101) konfiguriert wird, die Schadenskennzahlen (115) als Ausgangsgrößen auszugeben.

6. Verfahren nach Anspruch 5, wobei die eine oder mehr Schadenskennzahlen (115) einen Anteil und/oder eine Ausprägung zyklostationärer Frequenzen in den Beschleunigungssensordaten (106) charakterisieren.

7. Verfahren nach einem der Ansprüche 1 bis 6, wobei anhand der Magnetfeldsensordaten (107) ein Betriebspunktmodell der elektrischen rotatorischen Maschine (103) erstellt wird, wobei Betriebspunktmodell einen oder mehrere Betriebspunkte (111) durch den Betriebspunkten (111) zugeordnete Drehzahlbereiche charakterisiert, wobei in dem Betriebspunktmodell unterschiedlichen Betriebspunkten (111) unterschiedliche Drehzahlbereiche zugeordnet sind.

8. Verfahren nach Anspruch 7, wobei die unterschiedlichen Drehzahlbereiche aus den Magnetfeldsensordaten (107) ermittelt und auf Basis der unterschiedlichen Drehzahlbereiche die unterschiedlichen Betriebspunkte (111) definiert werden.

9. Verfahren nach Anspruch 7 oder 8, wobei die dem jeweiligen Betriebspunkt (111) korrespondierenden Beschleunigungssensordaten (106) anhand des Betriebspunktmodells ermittelt werden.

10. Verfahren nach einem der Ansprüche 1 bis 9, wobei das Modell (101) anhand weiterer gemessener Beschleunigungssensor- und Magnetfeldsensordaten (106, 107) aktualisiert wird, wobei Änderungen der Schadensschwere (114) verfolgt und in dem Modell (101) gespeichert werden.

11. Verfahren nach Anspruch 10, wobei für den Betriebspunkt (111) eine Trenderkennung für die dem Betriebspunkt (111) zugeordneten Schadensschwere (114), vorzugsweise mittels eines statistischen Modells, beispielsweise eines ARIMA-Modells erfolgt.

12. Verfahren nach Anspruch 10 oder 11, wobei aus den Änderungen eine verbleibende Lebensdauer der mechanischen Komponente der elektrischen rotatorischen Maschine (103) ermittelt wird.

13. Verfahren zum Bereitstellen eines Softsensors zum Messen eines mechanischen Schadens einer elektrischen rotatorischen Maschine (103), wobei
ein Hardware-Sensor (102) des Softsensors bereitgestellt wird, der zur Messung der Beschleunigungssensordaten (106) und den Beschleunigungssensordaten (106) korrespondierender Magnetfeldsensordaten (107) an der elektrischen rotatorischen Maschine (103) vorgesehen ist,
ein Modell (101) des Softsensors nach einem Verfahren nach einem der Ansprüche 1 bis 12 bereitgestellt wird.

14. Softsensor zum Messen eines mechanischen Schadens einer elektrischen rotatorischen Maschine (103), wobei der Softsensor umfasst:
- einen Hardware-Sensor (102), wobei der Hardware-Sensor (102) ausgebildet und konfiguriert ist, Beschleunigungssensordaten (106) und den Beschleunigungssensordaten (106) korrespondierende Magnetfeldsensordaten (107) an einer elektrischen rotatorischen Maschine (103) zu messen, und
- ein Modell (101), welches nach einem Verfahren nach einem der Ansprüche 1 bis 12 bereitgestellt ist.

15. Verfahren zum Messen eines mechanischen Schadens einer elektrischen rotatorischen Maschine (103) mittels eines Softsensors nach Anspruch 14, wobei
mit dem Hardware-Sensor (102) Beschleunigungssensordaten (106) und den Beschleunigungssensordaten (106) korrespondierende Magnetfeldsensordaten (107) gemessen und dem Modell (101) zugeführt werden,
das Modell (101) aus den Beschleunigungs- und Magnetfeldsensordaten (106, 107) eine Schwere (114) des Schadens einer mechanischen Komponente der elektrischen rotatorischen Maschine (103) ermittelt.
